# EUROPÄISCHE PATENTSCHRIFT

(11) **EP 0 558 896 B1**
(45) Veröffentlichungstag und Bekanntmachung des Hinweises auf die Patenterteilung: **01.05.1996**
(21) Anmeldenummer: 93100629.0
(22) Anmeldetag: 16.01.1993
(51) Int. Cl.: B64D 37/02

(54) **Dämpfungsvorrichtung**
Shock absorbing device
Dispositif antivibratoire

(30) Priorität: 06.03.1992 DE 4207061
(43) Veröffentlichungstag der Anmeldung: 08.09.1993
(73) Patentinhaber: Daimler-Benz Aerospace Aktiengesellschaft, D-80995 München (DE)
(72) Erfinder: Hornung, Ernst, W-2805 Stuhr 1 (DE); Öry, Huba, Prof., W-5100 Aachen (DE); Wenz, Herbert, W-2874 Lemwerder (DE)
(74) Vertreter: Hansmann, Dierk, Dipl.-Ing.

(56) Entgegenhaltungen:
- WO-A-92/20951
- FR-A- 2 596 489
- GB-A- 2 165 003
- US-A- 3 447 557

## Beschreibung

Die Erfindung betrifft eine Vorrichtung zur Dämpfung von Vibrationen an Komponenten, die vorgesehen sind für den Einbau in Behältern zur Aufnahme von Flüssigkeiten, insbesondere von Vibrationen an Rohrleitungen und Einbauten in Treibstoffbehältern für Land-, Luft- und Raumfahrzeuge, mit wenigstens einem flächig ausgebildeten Körper, der mit Durchgangsbohrungen versehen ist und der fest mit dem zu dämpfenden Bauteil verbunden ist. Eine derartige Vorrichtung ist aus der US-A-3 447 557 bekannt.

An Rohrleitungen und Einbauten in Treibstoffbehältern können bei Vibrationsanregungen hohe Antwortbeschleunigungen auftreten, die auf die geringe dynamische Dämpfung dieser Rohrleitungen zurückzuführen sind.

Daher sind derartige Rohrleitungen und Einbauten in hohem Maße durch Ermüdungsbeanspruchungen gefährdet, die letztendlich zum Bruch und damit zum Bauteilversagen führen können.

Zur Dämpfung von Pulsationen und Gasschlägen in Flüssigkeiten, die durch Rohrleitungen und Maschinen fließen, ist aus der Druckschrift WO 92/20951 eine Vorrichtung der eingangs genannten Art bekanntgeworden, bei der im Inneren eines von der Flüssigkeit durchflossenen Rohres ein den gesamten Rohrquerschnitt überdeckendes Lochblech angeordnet ist. Eine solche Anordnung ist nicht geeignet, Vibrationsanregungen zu dämpfen, wie sie beispielsweise in Inneren von treibstoffgefüllten Tanks in Satelliten in der Aufstiegsphase der diese in den Orbit befördernden Raketen auftreten können.

Aufgabe der Erfindung ist es deshalb, derartige vibrationsbeanspruchte Rohrleitungen, aber auch andere Einbauten in Behältern, die zur Aufnahme von Flüssigkeiten vorgesehen sind und bei denen Vibrationserscheinungen auftreten können, so auszubilden, daß ein vorzeitiges Versagen durch Materialermüdung auf einfache und zugleich zuverlässige Weise vermieden wird.

Die Erfindung löst diese Aufgabe durch eine Vorrichtung mit den kennzeichnenden Merkmalen des Patentanspruchs 1. Vorteilhafte Ausgestaltungen sind durch Merkmale der Unteransprüche gekennzeichnet.

Die erfindungsgemäße Vorrichtung ist dabei aufgrund der hohen Dämpfungswirkung, die sich im Verhältnis zur zusätzlich erforderlichen Massenerhöhung erzielen läßt, insbesondere für eine Anwendung in Raumflugkörpern geeignet. Die in den weiteren Ansprüchen angegebenen vorteilhaften Weiterbildungen der Vorrichtung nach der Erfindung dienen in erster Linie dem Zweck, diese Vorrichtung im Hinblick auf ihren vorgesehenen Einsatz in der Luft- und Raumfahrttechnik zu optimieren.

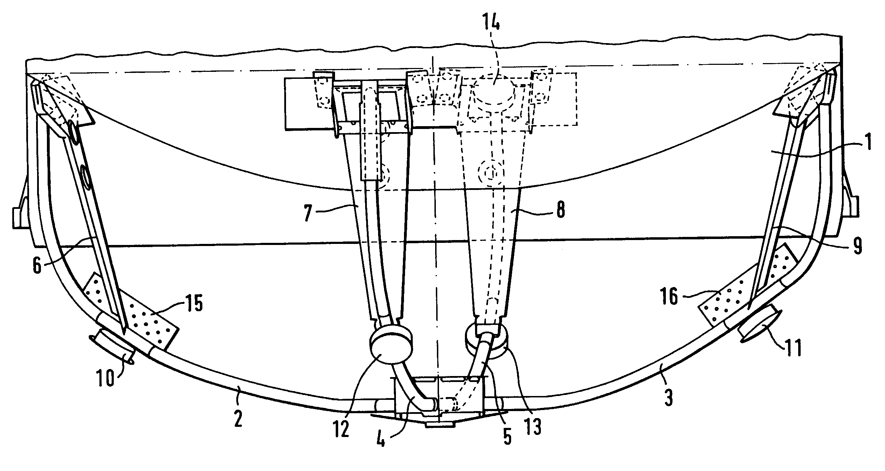

Nachfolgend soll die Erfindung anhand eines in der Zeichnung dargestellten Ausführungsbeispiels näher erläutert werden. Die Figur zeigt dabei das Innere eines Treibstoffbehälters 1 für einen Raumflugkörper, in diesem Fall einen Satelliten, der mit Triebwerken zur Lageregelung ausgerüstet ist. In diesem gefüllten Behälter 1 sind bei dem hier dargestellten Ausführungsbeispiel insgesamt 4 Treibstoffleitungen 2 bis 5 eingebaut, die jeweils zusätzlich über Versteifungselemente 6 bis 9 in ihrer Einbaulage fixiert werden. Jede der Treibstoffleitungen 2 bis 5 ist mit wenigstens einem Sieb 10 bis 14 versehen. Außerdem sind an den Treibstoffleitungen 2 bis 5 Dämpfungselemente 15 und 16 angeordnet. Letztere bestehen aus rechteckigen Lochplatten mit dem Medium verträglichen Werkstoff, im Fall des hier beschriebenen Ausführungsbeispiels aus Titan und sind jeweils fest mit der betreffenden Treibstoffleitung 2 bis 5 verbunden. Dies geschieht durch die Fügetechniken, wie Schweißen, Löten und Schrauben.

Bei dem hier beschriebenen Ausführungsbeispiel ist das Flächenverhältnis der Querschnitte sämtlicher in einer Lochplatte 15, 16 befindlicher Bohrungen zur Gesamtfläche der Lochplatte, F_{L}/F_{P}, so gewählt, daß es zwischen 10 und 25 Prozent beträgt. Im Rahmen der Erfindung ist es jedoch selbstverständlich auch möglich, ein anderes Flächenverhältnis zu wählen.

Abschließend sei noch angemerkt, daß in der Zeichnung aus Gründen der Übersichtlichkeit der Darstellung insgesamt nur zwei Dämpfungselemente 15, 16 enthalten sind. In der Regel hat es sich jedoch als vorteilhaft erwiesen, sämtliche Leitungen mit derartigen Dämpfungselementen zu versehen bzw. gegebenenfalls sogar mehr als ein Dämpfungselement pro Leitung vorzusehen.

## Patentansprüche

1. Vorrichtung zur Dämpfung von Vibrationen an Komponenten, die vorgesehen sind für den Einbau in Behältern zur Aufnahme von Flüssigkeiten, insbesondere von Vibrationen an Rohrleitungen und Einbauten in Treibstoffbehältern für Land-, Luft- und Raumfahrzeuge, mit wenigstens einem flächig ausgebildeten Körper, der mit Durchgangsbohrungen versehen ist und der fest mit dem zu dämpfenden Bauteil verbunden ist, dadurch gekennzeichnet, daß der Körper als Lochplatte (15, 16) ausgebildet ist und daß die Lochplatte (15,16) außerhalb des zu dämpfenden Bauteile (2 bis 5) angeordnet ist.

2. Vorrichtung nach Anspruch 1, dadurch gekennzeichnet, daß der Körper (15,16) aus Titan bzw. einen mit dem Medium verträglichen Werkstoff besteht.

3. Vorrichtung nach einem der Ansprüche 1 oder 2, dadurch gekennzeichnet, daß der Körper (15,16) durch Fügetechnik, wie Schweißen, Schrauben, Löten mit dem zu dämpfenden Bauteil (2 bis 5) verbunden ist.

## Claims

1. Device for damping vibrations in components intended for installation in containers for receiving liquids, in particular vibrations in piping and baffles in fuel tanks for land, air and space craft, having at least one two-dimensionally constructed body, which is provided with through bores and is firmly connected to the component to be damped, characterized in that the body takes the form of a perforated plate (15, 16) and that the perforated plate (15, 16) is disposed outside of the component (2 to 5) to be damped.

2. Device according to claim 1, characterized in that the body (15, 16) is made of titanium or a material which is compatible with the medium.

3. Device according to one of claims 1 or 2, characterized in that the body (15, 16) is connected by a joining method, such as welding, screwing, soldering, to the component (2 to 5) to be damped.

## Revendications

1. Dispositif d'amortissement de vibrations destiné à des éléments prévus pour être insérés dans des réservoirs de collecte de liquides, en particulier à des conduites et chicanes installées dans des réservoirs à combustible de véhicules routiers, aériens et spatiaux, ledit dispositif comprenant au moins un corps de structure plate, lequel est pourvu de perforations de passage et est relié fixement à l'élément de construction devant être amorti, **caractérisé en ce que** le corps est conçu comme une plaque perforée (15, 16) et en ce que ladite plaque perforée (15, 16) est disposée à l'extérieur de l'élément de construction (2 à 5) devant être amorti.

2. Dispositif selon la revendication 1, caractérisé en ce que le corps (15, 16) est composé de titane respectivement d'un matériau compatible avec le milieu.

3. Dispositif selon l'une ou l'autre des revendications 1 et 2, caractérisé en ce que le corps (15, 16) est relié à l'élément de construction (2 à 5) devant être amorti grâce à une technique d'assemblage telle que le soudage, le vissage ou le brasage.
